# EUROPEAN PATENT APPLICATION

(11) **EP 2 383 821 A1**
(43) Date of publication of application: **02.11.2011**
(21) Application number: 10733309.8
(22) Date of filing: 06.01.2010
(51) Int. Cl.: H01M 4/58, H01M 4/36, H01M 4/485, H01M 4/505, H01M 4/525, H01M 10/052, H01M 10/054

(54) **ACTIVE MATERIAL FOR NONAQUEOUS SECONDARY BATTERY, AND NONAQUEOUS SECONDARY BATTERY**

(30) Priority: 23.01.2009 JP 2009012860
(71) Applicant: Kabushiki Kaisha Toyota Jidoshokki, Kariya-shi, Aichi 448-8671 (JP)
(72) Inventor: NIWA, Junichi, Kariya-shi Aichi 448-8671 (JP); MURASE, Hitotoshi, Kariya-shi Aichi 448-8671 (JP)
(74) Representative: TBK
(86) International application number: PCT/JP2010/000049
(87) International publication number: WO 2010/084701

(57) **Abstract**

An active material for non-aqueous-system secondary battery according to the present invention is **characterized in that** it comprises a mixture of an alkali metal salt and a transition metal, and it carries out reversible oxidation-reduction by means of charging-discharging, oxidation-reduction in which an alkali metal is eliminated from a compound being made by reacting the alkali metal salt with the transition metal, and oxidation-reduction in which the alkali metal salt and the transition metal are reproduced from the compound into which the alkali metal has been inserted. It becomes feasible to make a non-aqueous-system secondary battery exhibit a higher capacity by using this active material for the non-aqueous-system secondary battery. Moreover, since the active material for non-aqueous-system secondary battery according to the present invention includes an alkali metal that works as electrolyte ions, another active material that is used for the counter electrode is not limited. For example, in a lithium-ion secondary battery, the safety upgrades because it is possible to forgo employing electrodes that include metallic lithium.

## Description

### TECHNICAL FIELD

The present invention is one which relates to a non-aqueous-system secondary battery, such as lithium-ion secondary batteries; in particular, one which relates to an active material for non-aqueous-system secondary battery.

### BACKGROUND ART

Secondary batteries, such as lithium-ion secondary batteries, have been used in a wide variety of fields like cellular phones and notebook-size personal computers, because they are compact and have large capacities. A lithium-ion secondary battery has active materials, which can insert lithium (Li) thereinto and eliminate it therefrom, for the positive electrode and negative electrode, respectively. And, it operates because the Li ions migrate within an electrolytic solution that is disposed between both the electrodes .

The performance of secondary battery is dependent on the materials of the positive electrode, negative electrode and electrolyte that constitute the secondary battery. Among them, the researches and developments of active-material substances that form active materials have been carried out actively. For the positive-electrode active material, it has been often the case that an oxide or composite oxide of transition metal is used, and the researches of positive-electrode active materials have been carried out, researches which aim at turning them into being of higher potential by replacing a part of oxygen with fluorine (F), and the like. For example, in Patent Literature No. 1, an active material is disclosed, active material which includes a transition metal (or "M"), and which is expressed by LiₐM₂O_{4-b}F_{b}. Moreover, as disclosed in Patent Literature No. 2 and Patent Literature No. 3, secondary batteries have been attracting attention recently, secondary batteries in which a halide of transition metal, such as FeF₃, is used as the positive-electrode active material.

Patent Literature No. 1: Japanese Unexamined Patent Publication (KOKAI) Gazette No. 2006-190,556;
Patent Literature No. 2: Japanese Unexamined Patent Publication (KOKAI) Gazette No. 9-22,698; and
Patent Literature No. 3: Japanese Unexamined Patent Publication (KOKAI) Gazette No. 9-55,201

### DISCLOSURE OF THE INVENTION

### Assignment to be Solved by the Invention

For example, when an Li ion is inserted into FeF₃, one of transition-metal halides, it is believed that the reaction proceeds up to the conversion region in which it goes through LiFeF₃ to be decomposed into Fe and LiF by means of a further insertion of Li. However, as set forth in paragraph [0007] of Patent Literature No. 2, it is speculated that the reaction up to the conversion region is less likely to occur because the bond between Fe and F is strong in FeF₃. Moreover, it is difficult to regenerate the original FeF₃ from the conversion region, and so it is believed that it becomes a cause of declining the battery performance when it is reacted up to the conversion region. Consequently, in Patent Literature No. 2 and Patent Literature No. 3, it is charged and discharged only in such a voltage range (e.g., in a range of from 4.5 V and up to 2 V when being a lithium-ion secondary battery) in which the reaction is not advanced up to the conversion region, as for the voltage range of charge-discharge. In the charge-discharge within this voltage range, FeF₃ inserts Li thereinto/eliminates it therefrom, and hence only the reversible reactions, FeF₃ + yLi ---> Li_{y}FeF₃ and Li_{y}FeF₃---> FeF₃+yLi (where 0 < y ≦ 1 in each of them), are done, and thereby the bond between Fe and F is kept. That is, the following come to be carried out: the reduction from Fe³⁺ and down to Fe²⁺ at the time of discharging; and the oxidation from Fe²⁺ and up to Fe³⁺ at the time of charging.

Meanwhile, when being reacted up to the conversion region, it is expected that a secondary battery can be turned into one with a significantly high capacity as being detailed layer, because FeF₃ is reduced electrolytically from Fe³⁺ and down to Fe⁰ by means of decomposition. However, there has been no such idea that FeF₃ can not only be readily decomposed but also be regenerated reversibly after the decomposition, and so the reaction up to the conversion region has been rather avoided from the viewpoint of battery performance. Moreover, although FeF₃ shows a high capacity when being used up to the conversion region, it is needed to use metallic lithium for the counter electrode, or to dope lithium into an active material in advance, because no lithium is included in the active material.

In view of the aforementioned problematic issues, the present invention aims at providing an active material for non-aqueous-system secondary battery, active material which comprises a combination of novel materials. Moreover, it aims at providing a non-aqueous-system secondary battery in which this active material is used as the positive-electrode active material.

### Means for Solving the Assignment

The present inventors arrived at thinking of constituting a novel active material for non-aqueous-system secondary battery by combining LiF and Fe, namely, an alkali metal salt and a transition metal, that exist in the conversion region. So far, there has been no such knowledge that an active material for non-aqueous-system secondary battery is obtainable by the combination of salt and metal. However, when a mixture of alkali metal salt and transition metal is put into a high-potential state, the transition metal is oxidized (or is deprived of the electrons), and then compounds are generated from the mixture because the exchange of anions occurs. Moreover, it was understood newly that alkali metal ions (or cations) being included in the alkali metal salt migrate, and thereby electricity can be taken out from out of the generated compounds.
Specifically, an active material for non-aqueous-system secondary battery according to the present invention is characterized in that:
it comprises a mixture of an alkali metal salt and a transition metal; and
it carries out reversible oxidation-reduction by means of charging-discharging, oxidation-reduction in which an alkali metal is eliminated from a compound being made by reacting an alkali metal salt with the transition metal, and oxidation-reduction in which the alkali metal salt and the transition metal are reproduced from the compound into which the alkali metal has been inserted.

Moreover, a non-aqueous-system secondary battery according to the present invention is equipped with:
a positive electrode including a positive-electrode active material that comprises the aforementioned active material for non-aqueous-system secondary battery according to the present invention; and
a negative electrode including a negative-electrode active material that comprises a material being capable of inserting an alkali metal thereinto/eliminating it therefrom.

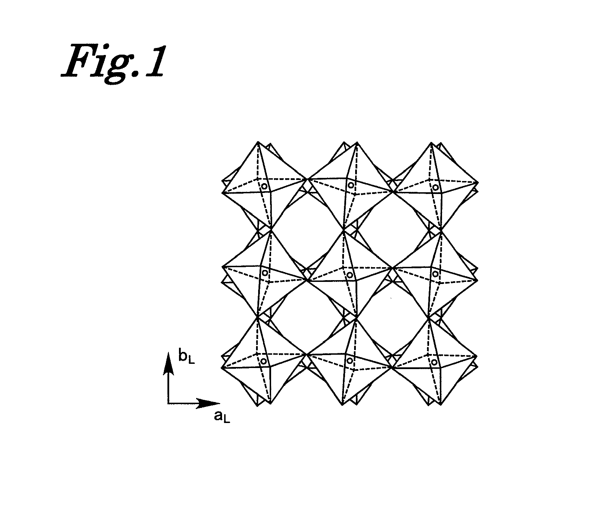

As an example, a crystalline structure of FeF₃, which is capable of inserting/eliminating alkali metal ions, is illustrated in Fig. 1. FeF₃ is a peroveskite-type fluoride, and possesses cationic vacancies in the structure. It is possible to insert alkali metal ions, like Li⁺, into the cationic vacancies in an amount of 1 mol maximally with respect to 1-mol FeF₃, thereby making LiFeF₃. On this occasion, the resulting theoretical capacity surpasses 230 mAh/g. Furthermore, LiFeF₃ reacts with Li ions, and so is decomposed to LiF and Fe eventually. That is, the reaction proceeds up to the conversion region, and thereby a capacity of 700 mAh/g or more is exhibited theoretically on this occasion. It is believed that this reaction occurs similarly even in a case where "Fe" is another transition metal element, "F" is another element that takes on a peroveskite structure along with the transition metal, and "Li" is another alkali metal element. Moreover, when being a structure that makes it possible to insert alkali metal ions thereinto and eliminate them therefrom possible, the structure is not limited to any peroveskite structure, but can even be a spinel structure. Therefore, it becomes feasible to make a non-aqueous-system secondary battery exhibit a higher capacity by means of using the active material for non-aqueous-system secondary battery according to the present invention that comprises a mixture of an alkali metal salt and a transition metal.

Moreover, since the active material for non-aqueous-system secondary battery according to the present invention includes an alkali metal that contributes to charging-discharging, another active material that is used for the counter electrode is not limited. For example, in a lithium-ion secondary battery, the safety upgrades because it is possible to forgo employing electrodes that include metallic lithium.

### BRIEF DESCRIPTION OF THE DRAWINGS

Fig. 1 illustrates a crystalline structure of FeF₃, a peroveskite-type fluoride;
Fig. 2 is an X-ray diffraction pattern of a mixed powder that comprises an LiF powder and an Fe powder; and
Fig. 3 illustrates charging-discharging curves of a lithium-ion secondary battery in which an active material for non-aqueous-system secondary battery according to the present invention made the positive-electrode active material.

### BEST MODE FOR CARRYING OUT THE INVENTION

Hereinafter, explanations will be made on some of the best modes for performing the active material for non-aqueous-system secondary battery and the non-aqueous-system secondary battery that are directed to the present invention.

(Active Material for Non-aqueous-system Secondary Battery) An active material for non-aqueous-system secondary battery according to the present invention (hereinafter being abbreviated to as "active material") comprises a mixture of an alkali metal salt and a transition metal. Here, an alkali metal means the following six elements, such as lithium (Li), sodium (Na), potassium (K), rubidium (Ru), cesium (Cs) and francium (Fr). Among them, Li and Na are preferable options, and have high capacities and exhibit reversible charging-discharging characteristics.

As described above, the active material according to the present invention forms a structure that makes it possible to insert alkali metal ions thereinto and eliminate them therefrom possible by means of charging-discharging. Concretely speaking,peroveskite structures, spinel structures, and the like, can be given. In order that it takes on these structures, it is allowable that the alkali metal salt can be a salt of an alkali metal element and an element "X," the element "X" bonding with a transition metal element "B" in a ratio of "B":"X" = from 1:1 to 1:3 to make the compound. It is preferable that the element "X," which bonds with a transition metal element in the aforementioned range, can preferably be at least one member that is selected from the elements of groups 15 through 17 in the Periodic Table. Particularly preferably, the following can be given: halogens (fluorine (F), chlorine (Cl), bromide (Br), iodine (I), and astatine (At)), oxygen, sulfur, and nitrogen; and it is permissible that it can be one or more members of these. Concretely speaking, the following can be given: LiF, NaF, Li₂O, Na₂O, Li₂S, Na₂S, Li₃N, and the like; it is even allowable that one of these can be used independently; or it is also permissible to mix two or more members of them to use. In particular, when the active material according to the present invention is expressed with a structural formula, ABX₃ ("A": alkali metal element; and "B": transition metal element) and takes on a peroveskite structure, it is allowable that the alkali metal salt can be expressed with "AX." It is permissible that "X" can be an element that has an anionic radius coinciding with the tolerance factor that enables a peroveskite structure to exist stably. As for a specific example of "X," the following can be given: halogen elements, an oxygen element, a sulfur element, and a nitrogen element; and it is allowable that it can be one or more members of these. That is, as for the alkali metal salt "AX," it is possible to suitably use oxides, in addition to halides, such as fluorides and chlorides. Concretely speaking, LiF, NaF, and so forth, can be given; it is even permissible that one of these can be used independently; or it is also allowable to mix two or more members of them to use.

There are not any limitations on the transition metal; the first-raw transition elements (or 3d transition elements: from Sc to Zn) can be given, for instance; and, among them, one or more members of iron (Fe), nickel (Ni), manganese (Mn) and cobalt (Co) can be given. Moreover, in a case where the active material according to the present invention takes on a peroveskite structure that is expressed by a structural formula, ABX₃, it is allowable to use a transition metal that can be in trivalence. Concretely speaking, Fe, Ni, Mn, Co, and the like, can be given. As the transition metal, it is even allowable that one member of these can be used independently; or it is also permissible to mix two or more members of them to use.

Of the aforementioned alkali metal salts andtransitionmetals, LiF and Fe, LiF and Ni, LiF and Mn, LiF and Co, and the like, can be given as an especially preferable combination of the alkali metal salt and transition metal.

The active material according to the present invention is a mixture of the alkali metal salt and transition metal. It is preferable that the alkali metal salt and transition metal can be powdery. When being a powder of the transition metal, it is feasible to employ the powder that is obtained by pulverizing the ingots, or by making the molten metals into powders. For example, the atomized powders can be procured with ease because they are commercially available. Moreover, although a powder of the alkali metal salt can be obtained by doing pulverization, and the like, it is also feasible to obtain the fine powders by doing heating, and so forth, onto solutions that include precursors of the alkali metal salt, thereby converting the precursors into them. Although there are not any limitations on average particle diameters of the alkali metal salt and transition metal, they can preferably be 10 µm or less because it is possible to anticipate that the reactions between the alkali metal salt and the transition metal can occur in small domains. In particular, in a mixed powder that is obtained by milling the alkali-metal-salt powder and the transition-metal powder, since not only the respective particles are mixed uniformly by means of milling but also the resulting particles become much finer, it becomes likely that the decomposition reaction toward the conversion region, and the generation of the compound that comprises the transition metal and the anion of the alkali metal salt can occur reversibly. The smaller an average particle diameter of the mixed powder is, the more favorable it is for this reversible reaction.

In a case where milling is done to obtain the mixed powder, it is allowable to set a milling rate to 100 rpm or more. This is because, when being less than 100 rpm, it is difficult to make the resulting powder fine even if the milling is carried out for a long period of time. Moreover, it is permissible to set a milling time so as to fall in a range of from 10 to 24 hours. This is because, when being less than 10 hours, the effect of making it fine is poor; and because there are not any great improvements in the effect of making it fine even when the milling is done for more than 24 hours.

It is allowable that a blending proportion of the active material according to the present invention can be determined in compliance with types of compounds that are generated by means of charging-discharging; and it is permissible that it can be set so as to fall in a range of from 1:1 to 1:3 by molar ratio between the transition metal and the alkali metal salt. This is because of the following: When a compound that is produced by means of charging-discharging has a peroveskite structure (e.g., ABX₃), it leads to making 3AX + B <--- ---> BX₃ + 3A theoretically by means of the insertion and elimination of electrolyte ion (i. e. , the alkali metal ion: A⁺), and hence it is assumed to be preferable to set the transition metal "B": the alkali metal salt "AX" at 1: 3 approximately by molar ratio.

(Constitution of Electrode and Manufacturing Process) The aforementioned active material according to the present invention, an electrically-conductive assistant member, and a binder agent that binds the active material and the electrically-conductive assistant agent together are included to constitute an electrode.

The active material is the aforementionedmixture of an alkali metal salt and a transition metal. Note that, based on the condition that an alkali metal salt and a transition metal are used as a principal active-material substance, it is advisable to add an active material, which has already been known publicly, to it to use. Moreover, since a variety of combinations are feasible for the alkali metal salt and transition metal as having been explained already, it is even possible to independently use one member of them, respectively; or it is also possible to mix two or more members of them to use.

As for the electrically-conductive assistant member, it is allowable to use materials that have been used commonly in electrodes for non-aqueous-system secondary battery. For example, it is preferable to use electrically-conductive carbonaceous materials, such as carbon black, acetylene black, KETJENBLACK and carbon fibers. It is permissible to use one member of these independently, or to mix two or more members of them to use. It is desirable to subject the electrically-conductive assistant materialto milling along with the aforementioned active material to use, because the resulting electric conductivity upgrades furthermore. It is preferable that a blending proportion of the electrically-conductive assistant member can be the active material: the electrically-conductive assistant member = from 1:0.05 to 1:1 by mass ratio. This is because it is not possible to form any electrically-conductive networks with good efficiency when the electrically-conductive assistant member is too less; moreover, that is because not only the formability of electrode gets worse but also an energy density of the resultant electrode becomes lower when the electrically-conductive assistant member is too much.

The binder agent is not one which is limited especially, and so it is advisable to use those which have been known publicly already. For example, it is possible to use resins that do not decompose even at high electric potentials, such as fluorine-containing resins like polytetrafluoroethylene, polyvinylidene fluoride, and so forth. It is preferable that a blending proportion of the binder agent can be the active material: the binder agent = from 1:0.05 to 1:0.5 by mass ratio. This is because the formability of electrode gets worse when the binder agent is too less; moreover, that is because an energy density of the resultant electrode becomes lower when the binder agent is too much.

It is common that the active material according to the present invention is used in such a state that it is compression bonded to an electricity collector as an active-material layer in the electrode. For the electricity collector, it is possible to use meshes made of metals, and metallic foils. When using the active material according to the present invention for a positive electrode, it is advisable to use an electricity collector made of aluminum or an aluminum alloy, and the like, which is less likely to dissolve at high electric potentials; whereas, to use an electricity collector made of copper, and so forth, when using it for a negative electrode.

There are not any limitations on a manufacturing process for the electrode, and hence it is allowable to follow a manufacturing process of electrode for non-aqueous-system secondary battery that has been performed commonly. For example, the aforementioned electrically-conductive assistant member, and the aforementioned binder agent are mixed with the aforementioned active material, then an appropriate amount of an organic solvent is added thereto, if needed, and thereby a paste-like mixed electrode member is obtainable. This mixed electrode member is coated onto a surface of the electricity collector, and is compression bonded thereon by carrying out pressing, and the like, if necessary, after being dried. In accordance with this manufacturing process, the thus prepared electrode makes a sheet-shaped electrode. It is permissible to cut out this sheet-shaped electrode to dimensions that are in compliance with the specifications of non-aqueous-system secondary batteries to be manufactured.

The active material according to the present invention is employable either as an active material for the positive electrode of non-aqueous-system secondary battery, or as an active material for the negative electrode thereof. Moreover, as described above, since the active material according to the present invention includes an alkali metal that turns into electrolytic ions in battery reactions, an active material that is used for the counter electrode is not limited. For example, in a case where the active material according to the present invention is used as a negative-electrode active material for non-aqueous-system secondary battery, it is advisable to constitute the non-aqueous-system secondary battery by making the positive electrode of an electrode, in which a lithium-containing oxide like LiCoO₂ or Li₂MnO₃, or a compound like MoS or sulfur that does not include any lithium, serves as the active material, for instance. Hereinafter, a case where the active material according to the present invention is used as a positive-electrode active material of a non-aqueous-system secondary battery will be explained.

### (Non-aqueous-system Secondary Battery)

A non-aqueous-system secondary battery according to the present invention is equipped with: a positive electrode including a positive-electrode active material that comprises the aforementioned active material for non-aqueous-system secondary battery according to the present invention; and a negative electrode including a negative-electrode active material that comprises a material being capable of inserting an alkali metal thereinto/eliminating it therefrom. The construction and manufacturing process of the positive electrode are the same as those having been described already.

It is preferable that the negative electrode can be an electrode whose active material is made of the following: an alkali metal, such as Li or Na; an alloy of the alkali metal; a carbonaceous material, such as graphite, cokes or hard carbon; a metal like tin that forms an alloy with the alkali metal; silicon; or a compound including one of them, and the like, for instance. It is advisable to make the negative electrode by means of a common manufacturing process that is in conformity with the aforementioned manufacturing process for electrode.

In the non-aqueous-system secondary battery using the electrode according to the present invention, a separator being interposed between the positive electrode and the negative electrode, and a non-aqueous electrolytic solution are provided in the same manner as common secondary batteries, in addition to the positive electrode and negative electrode. The separator is one which separates the positive electrode from the negative electrode, and which retains the electrolytic solution therein, and so it is possible to use a thin microporous membrane, such as polyethylene or polypropylene, therefor. Moreover, the non-aqueous electrolytic solution is one in which the alkali metal salt serving as an electrolyte has been dissolved in an organic solvent. As for the organic solvent, it is possible to use one member of non-protonic organic solvents like ethylene carbonate, propylene carbonate, dimethyl carbonate, diethyl carbonate, ethylmethyl carbonate or imidazole-system ionic liquids, and so forth, for instance; or to use a mixed liquid of two or more members of these. Moreover, as for an electrolyte to be dissolved therein, it is possible to use an alkali metal salt, such as LiPF₆, LiBF₄, LiAsF₆, LiI, LiClO₄, LiN(SO₂CF₃)₂ (or LiTFSI, an abbreviation), LiN (SO₂C₂F₅)₂ (or LiBETI, an abbreviation), NaPF₆, NaBF₄ or NaAsF₆, that is soluble in the organic solvent. Moreover, the following are also employable: polymers like polyethylene oxide (or PEO) in which a supportive salt is put instead of the non-aqueous-system electrolytic solution; gel electrolytes in which the electrolytic solution is confined by PVdF; inorganic compounds with lithium-ion conducting capability that include Li₂S; and solid electrolytes such as glass.

There are not any limitations on a configuration of the non-aqueous-system secondary battery, and hence it is possible to employ a variety of configurations, such as cylindrical types, laminated types and coin types. Even in a case where any one of the configurations is adopted, a battery is made as follows: the separators are interposed between the positive electrodes and the negative electrodes, thereby making electrode assemblies; and then these electrode assemblies are sealed in a battery case along with the non-aqueous-system electrolytic solution after connecting intervals to and from the positive-electrode terminals and negative-electrode terminals, which lead to the outside from the positive-electrode assemblies and negative-electrode assemblies, with use of leads for collecting electricity, and the like.

The oxidation-reduction that is accompanied by the charging-discharging of the above-explained non-aqueous-system secondary battery according to the present invention, will be explained using a peroveskite-type ABX₃. The non-aqueous-system secondary battery according to the present invention carries out reversible oxidation-reduction which generates BX₃ from an alkali metal salt "AX" and transition metal "B" via A_{y}BX₃ (0 < y ≦ 1) by means of charging, and which reproduces the "AX" and "B" from the BX₃ via AyBX₃ (0 < y ≦ 1) by means of discharging.

Since the active material according to the present invention is in the conversion region that comprises the alkali metal salt and the transition metal, it is desirable to sweep the discharge cutoff voltage down to those which are lower than having been done conventionally. For example, in a lithium-ion secondary battery being equipped with a negative electrode that includes a negative-electrode active material including lithium, the charging-discharging is usually carried out while setting the voltage range from 4.5 V to 2.0 V. However, in a lithium-ion secondary battery in which the active material according to the present invention is used as the positive-electrode active material, it is desirable to set the discharge cutoff voltage to less than 2.0 V, and further from 1.5 V to 1.0 V. For example, it is advisable to set the voltage range from 4.5 V to 1.5 V.

So far, the embodiment modes of the active material for non-aqueous-system secondary battery and those of the non-aqueous-system secondary battery that are directed to the present invention have been explained. However, the present invention is not one which is limited to the aforementioned embodiment modes. It can be conducted in various modes to which modifications, improvements, and the like, which one of ordinary skill in the art can carry out, are performed, within a range not departing from the scope of the present invention.

### EXAMPLES

Hereinafter, the present invention will be explained concretely while giving specific examples of an active material for non-aqueous-system secondary battery and a non-aqueous-system secondary battery that are directed to the present invention.

### (Preparation of Active Material)

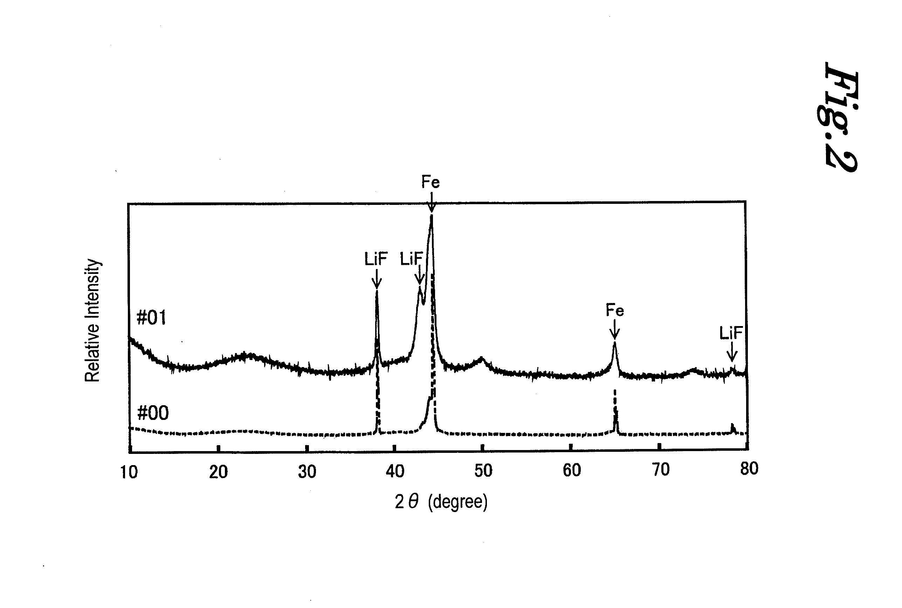

An LiF powder (produced by SOEKAWA CHEMICAL Co., Ltd., and having an average particle diameter of 3 µm), and a commercially available Fe powder (having an average particle diameter of 3 µ m) were made ready. 5 g of the LiF powder and 7 g of the Fe powder were weighed (i.e., Li: Fe = 3:1 by molar ratio), and were mixed by means of a ball mill. In the mixing, the milling rate was set at 600 rpm, and the milling time was set at 24 hours. An X-ray diffraction analysis (with CuK_{α}) was carried out for the obtained mixed powder (or Active Material #01). The result is illustrated in Fig. 2. Note that, in Fig. 2, an X-ray diffraction pattern of a mixed powder (Active Material #00) with an identical blending proportion that was obtained by doingmanual stirring for a fewminutes is also shown along therewith. Since the diffraction peak of Active Material #01 was broader than that of Active Material #00, it was understood that the respective particles become finer by means of carrying out milling. Moreover, since the respective diffraction peaks for LiF and Fe were obtained in any one of #01 and #00, it is understood that LiF and Fe were not reacted with each other by milling in #01.

(Manufacture of Electrode for Lithium-ionSecondaryBattery) An electrode was manufactured using Active Material #01. Active Material #01 was mixed with acetylene black (or AB) that served as the electrically-conductive assistant agent, and was further mixed with polytetrafluoroethylene (or PTFE) that served as the binder agent for binding the active material and the electrically-conductive member together; then an appropriate amount of a solvent (e.g., ethanol) was added thereto and was kneaded therewith, and thereby a paste-like mixed electrode member was prepared. A blending ratio of Active Material #01, "AB" and "PTFE" was 1:1.66:1.33 by mass ratio. Next, this mixed electrode member was coated onto the opposite faces of an electricity collector (e.g., a mesh made of aluminum, and having a thickness of 20 µm), and was compression bonded thereon after being dried, thereby obtaining a sheet-shaped electrode.

### (Manufacture of Lithium-ion Secondary Battery)

A lithium-ion secondary battery was manufactured, lithium-ion secondary battery in which the electrode being manufactured in accordance with the aforementioned procedure was served as the positive electrode. Metallic lithium (with 500-µm thickness) was made into the negative electrode to be faced with the positive electrode. The positive electrode was cut out to φ 13 mm, the negative electrode was cut out to φ 15 mm, and then a separator (e.g., CELGARD2400, a glass filter produced by HOECHST CELANESE Corporation) was interposed between the two, thereby making an electrode-assembly battery. This electrode-assembly battery was accommodated in a battery case (e. g., CR2032, a coin cell produced by HOHSEN Co. , Ltd.). Moreover, a non-aqueous electrolyte, in which LiPF₆ was dissolved in a concentration of 1 M into a mixed solvent in which ethylene carbonate and diethyl carbonate were mixed in a volumetric ratio of 1:1, was injected into the battery case. The battery case was sealed hermetically, thereby obtaining Lithium-ion Secondary Battery #11.

### (Evaluation)

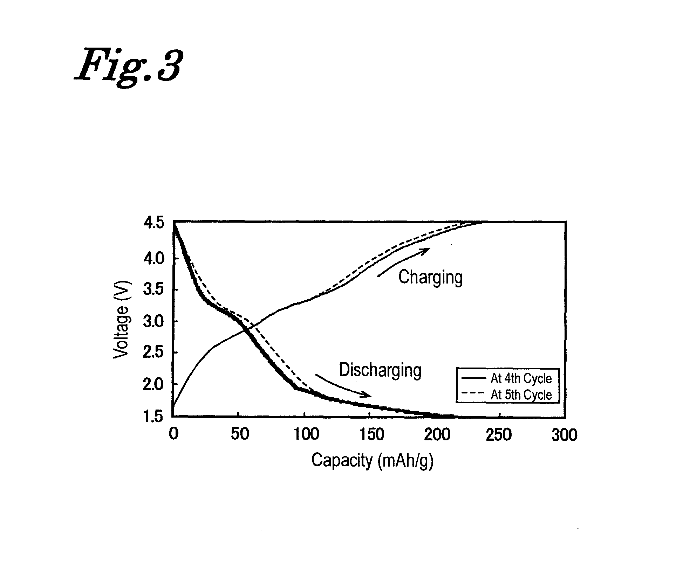

A charging-discharging test was carried out with respect to Lithium-ion Secondary Battery #11, thereby evaluating the charging-discharging characteristic. In the test, the discharging was carried out up to a discharge cutoff voltage of 1.5 V with a constant current of 0.01 mA after the charging was carried out up to a charge cutoff voltage of 4.5 V with a constant current of 0.01 mA in a temperature environment of 30°C. The charging-discharging was carried out repeatedly, thereby measuring capacities per unit weight of the positive-electrode active material with respect to voltages. The charging-discharging characteristic at the time of fourth cycle, and that at the time of fifth cycle are illustrated in Fig. 3.

It was understood that Lithium-ion Battery Secondary #11 had a high capacity (e.g., the capacity was 225 mAh/g at the time of fifth cycle) and exhibited a reversible charging-discharging characteristic. That is, it was found that not only an active material comprising a mixture of LiF, an alkali metal salt, and Fe, a transition metal, shows a reversible charging-discharging characteristic but also a non-aqueous-system secondary battery using that active material has a high capacity. Since the capacity of a commercially available common lithium-ion secondary battery is 150 mAh/g approximately, the lithium-ion secondary battery labeled #11 had a capacity that was higher than that of the ordinary by one and one-half times approximately. Moreover, according to the charging-discharging curves in Fig. 3, the gradients of the graphs changed greatly before and after the voltage was at around 2.0 V that made the threshold. This suggests that LiFeF₃ started being decomposed into LiF and Fe in the vicinity of 2.0 V.

Note that it was ascertained by means of the same charging-discharging test as aforementioned that, even in a lithium-ion secondary battery that was manufactured using Active Material #00 instead of Active Material #01, the charging-discharging was carried out reversibly.

## Claims

1. An active material for non-aqueous-system secondary battery, the active material being **characterized in that**:
it comprises a mixture of an alkali metal salt and a transition metal; and
it carries out reversible oxidation-reduction by means of charging-discharging, oxidation-reduction in which an alkali metal is eliminated from a compound being made by reacting the alkali metal salt with the transition metal, and oxidation-reduction in which the alkali metal salt and the transition metal are reproduced from the compound into which the alkali metal has been inserted.

2. The active material for non-aqueous-system secondary battery as set forth in claim 1, wherein said alkali metal salt is a salt of an alkali metal element, and an element "X" that bonds with a transition metal element "B" in a ratio of "B":"X" = from 1:1 to 1:3 to make said compound.

3. The active material for non-aqueous-system secondary battery as set forth in claim 2, wherein said compound undergoing the insertion/elimination of the alkali metal has a peroveskite structure.

4. The active material for non-aqueous-system secondary battery as set forth in either claim 1 or 2, wherein said alkali metal salt is one or more members being selected from the group consisting of halides, nitrides, sulfides, and oxides.

5. The active material for non-aqueous-system secondary battery as set forth in claim 4, wherein said alkali metal salt is a halide of lithium.

6. The active material for non-aqueous-system secondary battery as set forth in claim 5, wherein:
said alkali metal salt is lithium fluoride (or LiF);
said transition metal is iron (or Fe).

7. The active material for non-aqueous-system secondary battery as set forth in claim 1, wherein said mixture comprises a mixed powder of an alkali metal salt powder and a transition metal powder.

8. The active material for non-aqueous-system secondary battery as set forth in claim 7, wherein said mixed powder is made by milling said alkali metal salt powder and said transition metal powder.

9. A non-aqueous-system secondary battery being equipped with:
a positive electrode including a positive-electrode active material that comprises the active material for non-aqueous-system secondary battery as set forth in claim 1; and
a negative electrode including a negative-electrode active material that comprises a material being capable of inserting an alkali metal thereinto/eliminating it therefrom.

10. The non-aqueous-system secondary battery as set forth in claim 9, wherein:
said negative-electrode active material includes lithium; and
a discharge cutoff voltage is less than 2.0 V.

## Amended claims

### Amended claims under Art. 19.1 PCT

**1.** (Amended) An active material for non-aqueous-system secondary battery, the active material being **characterized in that**:
it comprises a mixture of a halide of alkali metal and iron in an initial state during charging-discharging; and
it carries out reversible oxidation-reduction between zerovalent Fe and tetravalent Fe with a valence of three by means of charging-discharging, oxidation-reduction in which the alkali metal is eliminated from a compound being made by reacting the halide of alkali metal with the iron to generate iron (III) halide, and oxidation-reduction in which the halide of alkali metal and the iron are reproduced from the compound into which the alkali metal has been inserted.

**2.** (Amended) The active material for non-aqueous-system secondary battery as set forth in claim 1, wherein a blending proportion in said compound is from 1:1 to 1:3 by molar ratio between said iron and said halide of alkali metal.

**3.** (Amended) The active material for non-aqueous-system secondary battery as set forth in claim 1, wherein said compound undergoing the insertion/elimination of the alkali metal has a peroveskite structure.

**4.** (Deleted)

**5.** (Amended) The active material for non-aqueous-system secondary battery as set forth in claim 1, wherein said halide of alkali metal is a halide of lithium.

**6.** (Amended) The active material for non-aqueous-system secondary battery as set forth in claim 5, wherein said halide of alkali metal is lithium fluoride (or LiF).

**7.** (Amended) The active material for non-aqueous-system secondary battery as set forth in either one of claims 1 through 6, wherein said mixture comprises a mixed powder of a powder of said halide of alkali metal and a powder of said iron.

**8.** (Amended) The active material for non-aqueous-system secondary battery as set forth in claim 7, wherein said mixed powder is made by milling said powder of the halide of alkali metal and said powder of the iron.

**9.** A non-aqueous-system secondary battery being equipped with:
a positive electrode including a positive-electrode active material that comprises the active material for non-aqueous-system secondary battery as set forth in claim 1; and
a negative electrode including a negative-electrode active material that comprises a material being capable of inserting/eliminating the alkali metal.

**10.** The non-aqueous-system secondary battery as set forth in claim 9, wherein:
said negative-electrode active material includes lithium; and
a discharge cutoff voltage is less than 2.0 V.

**11.** (Added) The active material for non-aqueous-system secondary battery as set forth in claim 1, wherein:
the active material generates BX₃ via A_{y}BX₃ (0 < y ≦ 1) from a halide of alkali metal (being labeled "AX") and iron (being labeled "B") by means of charging; and
the active material reproduces AX and B via A_{y}BX₃ (0 < y ≦ 1) from BX₃ by means of discharging.

**12.** (Added) A charging-discharging method for non-aqueous-system secondary battery being **characterized in that** it utilizes a reversible oxidation-reduction reaction between zerovalent Fe and tetravalent Fe in an active material for non-aqueous-system secondary battery, the active material comprising a mixture of iron and a halide of alkali metal in an initial state during charging-discharging;
the reversible oxidation-reduction reaction eliminates an alkali metal from a compound being made by reacting the halide of alkali metal with the iron to generate iron (III) halide; and
the reversible oxidation-reduction reaction reproduces the halide of alkali metal and the iron from the compound into which the alkali metal has been inserted.
